# EUROPÄISCHE PATENTSCHRIFT

(11) **EP 0 535 618 B1**
(45) Veröffentlichungstag und Bekanntmachung des Hinweises auf die Patenterteilung: **18.06.1997**
(21) Anmeldenummer: 92116692.2
(22) Anmeldetag: 30.09.1992
(51) Int. Cl.: G01N 15/04, B04B 5/04, B04B 13/00

(54) **Vorrichtung zur Trennung von Medien in deren Bestandteile**
Apparatus for separating fluids into their components
Appareil pour la séparation des fluides en leurs constituants

(30) Priorität: 04.10.1991 DE 4132965
(43) Veröffentlichungstag der Anmeldung: 07.04.1993
(73) Patentinhaber: Fresenius AG, 61350 Bad Homburg (DE)
(72) Erfinder: Brass, Henning, W-6650 Homburg (DE); Kreber, Stefan, W-6600 Saarbrücken (DE); Meisberger, Arthur, W-6690 St. Wendel-Winterbach (DE)
(74) Vertreter: Fuchs, Luderschmidt & Partner Patentanwälte

(56) Entgegenhaltungen:
- EP-A- 0 392 475
- DE-A- 3 301 113
- DE-A- 3 515 915
- US-A- 4 493 691
- US-A- 4 670 002
- US-A- 4 724 317

## Beschreibung

Die Erfindung bezieht sich auf eine Vorrichtung zur Trennung von Medien in deren Bestandteile durch Dichtezentrifugation in einer Trennkammer, mit einer Anordnung zum Erfassen und Einstellen der Phasengrenze zwischen mindestens zwei optisch unterscheidbaren Fraktionen des Mediums (Phasendetektor), bestehend aus einer Lichtquelle, die die Trennkammer im Bereich der sich einstellenden Phasengrenzen beleuchtet, aus einer Lichtempfängeranordnung und einer Optik, die einen bestimmten Abschnitt des Bereiches auf die Lichtempfängeranordnung abbildet, die auf unterschiedliche Lichtsignale entsprechend optischen Unterschieden der Fraktionen anspricht, und aus einer der Lichtempfängeranordnung nachgeschalteten elektrischen Steuerschaltung zum Auslösen von Steuersignalen.

Eine solche Vorrichtung ist zum Beispiel aus der US-A 4,724,317 und der DE-A 33 01 113 (= EP-B 0 116 716) bekanntgeworden. Als Medien kommen vor allem Körperflüssigkeiten, insbesondere Blut, in Frage.

Die Anordnung zum Erfassen und Einstellen der Phasengrenze bei derartigen Vorrichtungen, der Phasendetektor, soll die Trennleistung der Trennvorrichtung verbessern. Die bekannte Anordnung nutzt dazu die unterschiedliche Lichtdurchlässigkeit der einzelnen Fraktionen des Mediums aus. Zu diesem Zweck sind die Lichtquelle und die Lichtempfängeranordnung mit der Optik so angeordnet, daß diese mit dem Licht beaufschlagt wird, welches durch die Fraktionen hindurchgeht und durch die unterschiedliche Absorption in den einzelnen Fraktionen unterschiedlich geschwächt wird. Abhängig von dem Verhältnis der Lichtsignale wird die Phasengrenze festgelegt bzw. werden andere Vorgänge ausgelöst.

Bei einer derartigen Anordnung ist es nachteilig, daß die Festlegung der Phasengrenze bzw. die Erzeugung anderer Steuersignale lediglich aufgrund einer Hell-Dunkelunterscheidung erfolgt, so daß weder zwischen den einzelnen lichtundurchlässigen Fraktionen unterschieden werden kann, noch eine mit einem derartigen Phasendetektor versehene Trennvorrichtung bei spenderbedingt stark getrübtem Blutplasma eingesetzt werden kann.

Vorstehende Problematik wird durch eine Anordnung gemäß US-A 4,493,691 umgangen. Bei dieser Anordnung ist eine TV-Kamera vorgesehen, welche das durch den transparenten Rotor der Trennkammer sichtbare Bild aufzeichnet und auf einem TV-Display abbildet. Die Regulierung der Position der Phasengrenze wird manuell von einer Bedienungsperson ausgeführt.

Eine manuelle Nachregelung der Phasengrenze aufgrund einer visuellen Phasengrenzenbeobachtung bringt erhebliche Nachteile. Die Genauigkeit des Erfassungssystems ist beschränkt durch die visuellen Grenzen des menschlichen Auges sowie die Grenze der TV-Technik selbst. Ferner ist während des gesamten Laufes der Trennvorrichtung die Anwesenheit von geschultem Personal notwendig. Diese konventionelle Methode ist somit nur suboptimal und nur mit hohem technischen und personellen Aufwand durchführbar.

Der Erfindung liegt die Aufgabe zugrunde, ausgehend von der eingangs bezeichneten Vorrichtung mit einem die Phasengrenze selbsttätig erfassenden und einstellenden Phasendetektor diesen so auszugestalten, daß er ein differenzierteres Erfassungsvermögen und Regelverhalten aufweist und damit die Einsatzmöglichkeiten der Trennvorrichtung unter starker Verbesserung der Trennleistung erweitert.

Die Lösung dieser Aufgabe gelingt gemäß der Erfindung dadurch, daß Lichtquelle und Lichtempfängeranordnung mit der Optik derart angeordnet sind, daß die Lichtempfängeranordnung Lichtsignale entsprechend den Helligkeitsstufen der zu Trennenden Fraktionen empfängt und die Steuerschaltung so ausgebildet ist, daß differenziert Steuersignale abhängig von den Helligkeitsstufen der abgetrennten Fraktionen auslösbar sind.

Bei der erfindungsgemäßen Vorrichtung wird daher nicht, wie im bekannten Fall der EP-Schrift, über eine Lochreihe nur zwischen dunklen und hellen Bestandteilen des Mediums unterschieden, sondern zwischen Bestandteilen verschiedener Helligkeitsgrade.

Der erfindungsgemäße Phasendetektor ist daher in der Lage, die verschiedenen Helligkeitsstufen bzw. Färbungen der zu trennenden Fraktionen bzw. Bestandteile zu unterscheiden und abhängig davon die Regelung von Verfahrensparametern durchzuführen.

Auf diese Weise kann die radiale Position der Phasengrenze differenziert in der Separationskammer festgelegt werden. Durch die vorliegende Erfindung ist es daher möglich, die Phasengrenzen wesentlich genauer zu erfassen, als dies mit bisherigen Phasendetektoren möglich ist. Es können auch differenziert einzelne voneinander separierte Bestandteile während des Zentrifugierens erkannt werden. Eine Anwendung im Bereich zum Beispiel der Blutzellseparation ermöglicht daher die Unterscheidung sowie die Bestimmung der radialen Schichtdicke von roten und weißen Blutzellen, sedimentierten Thrombozyten und Blutplasma. Des weiteren kann aufgrund der Helligkeitsänderung des Blutplasmas auf dessen Thrombozytengehalt geschlossen werden.

Darüber hinaus kann die Trennvorrichtung mit dem erfindungsgemäßen Phasendetektor auch bei getrübten, und damit für Licht undurchlässigen Medien eingesetzt werden. Dies erschließt gerade im klinischen Bereich neue Möglichkeiten der Behandlung.

Der konventionellen Methode der visuellen Phasengrenzenbeobachtung und manuellen Regelung ist die vorliegende Erfindung sowohl durch Präzision der Erfassungseinheit überlegen, als auch durch die schnelle und sichere Verarbeitung in der elektrischen Schaltung einer Rechen- und Regeleinheit.

Gemäß einer Weiterbildung der Erfindung ist die Vorrichtung so ausgestaltet, daß die Lichtempfängeranordnung aus einer Anordnung von mindestens zwei voneinander getrennten Photosensoren besteht, die selektiv und proportional der Helligkeit der zu trennenden Bestandteile Ausgangssignale liefern, denen als Steuerschaltung eine Recheneinheit nachgeschaltet ist, wobei die Recheneinheit, vorzugsweise ein Mikroprozessor, die Ausgangssignale verarbeitet und gemäß einem vorgebbaren Programm mindestens eine nachgeschaltete Stufe ansteuert.

Bei einer derartigen Lichtempfängeranordnung und Steuerschaltung ist eine besonders günstige Erfassung und Einstellung der Phasengrenze möglich. Die Photosensoren dieser Lichtempfängeranordnung sind zweckmäßig linear angeordnet und bilden vorzugsweise einen sog. CCD-Zeilensensor. Eine derartige Empfängeranordnung und Recheneinheit arbeitet sehr schnell und genau, so daß über die nachgeschaltete Stufe eine optimale Trennleistung der Trennvorrichtung gewährleistet ist.

Die nachgeschaltete Stufe kann ein Stellglied (Regeleinheit) für die Ansteuerung der Phasengrenze sein, vorzugsweise eine Pumpe für den Abzug einer abgetrennten Fraktion. Im Falle der Blutseparation ist diese Pumpe vorzugsweise die Plasmapumpe. Durch Änderung des Plasmaflusses kann die Position der Phasengrenze geändert bzw. die Schichtdicke der einzelnen Fraktionen in der Kammer eingestellt werden. Die nachgeschaltete Stufe kann jedoch auch ein Drucker oder ein Plotter bzw. ein Display sein, wobei die nachgeschalteten Stufen auch in Kombination vorgesehen sein können.

Gemäß einer vorteilhaften Weiterbildung der Vorrichtung ist die Lichtquelle so angeordnet, daß sie den vorgegebenen Bereich der Trennkammer im Auflicht beleuchtet bzw. ist die Lichtempfängeranordnung mit der Optik so angeordnet, daß das reflektierte Licht auf die Lichtempfängeranordnung abbildbar ist. Bei einem derartigen Strahlengang sind die Helligkeitsunterschiede in den Bestandteilen besonders deutlich darstellbar.

Grundsätzlich ist es auch denkbar, eine Lichtquelle zu verwenden, die, abhängig von dem zu trennenden Medium, dessen Bestandteile unterschiedlich zur Fluoreszenz anregt. Die Helligkeiten drücken sich in diesem Fall durch unterschiedliche Fluoreszenzintensitäten aus.

Gemäß einer Weiterbildung der Erfindung ist die Lichtquelle vorzugsweise intermittierend anschaltbar, vorzugsweise synchron mit der Drehung der Trennkammer. Dies kann zum Beispiel mit Hilfe eines Stroboskops geschehen. Es ist auch denkbar, die Aktivierung der Lichtquelle durch verschiedene Reize auszulösen. Denkbar ist eine Triggerung durch die Drehzahl oder abhängig von der Winkelstellung des Rotors der Trennkammer oder durch eine optische und/oder magnetische bzw. elektrische Markierung. Generell gesehen kann daher die Lichtquelle über eine Markierung am Disposable bzw. über die Geometrie der Antriebsvorrichtung der Trennkammer ausgelöst werden.

Eine weitere bevorzugte Anwendungsmöglichkeit ist durch die zeitliche Änderung des Lichtauslösemomentes gegeben. Dadurch wird es möglich, verschiedene Bereiche der Trennkammer abzutasten und so z.B. ein zweidimensionales Bild oder mehrere eindimensionale Bilder in ganz verschiedenen Bereichen der Kammer zu erzeugen. Verwirbelungen in der Trennkammer sind somit leicht zu erkennen.

Gemäß einer weiteren Ausgestaltung der Erfindung ist als Lichtquelle vorzugsweise eine Infrarot-Leuchtdiode vorgesehen. Diese Leuchtdioden erzeugen kurze Lichtblitze, die durch die vorstehend angeführten Steuersignale besonders einfach ausgelöst werden können. Durch die Verwendung von Infrarot- Leuchtdioden ist darüber hinaus ein sehr leistungsfähiges Beleuchtungssystem gegeben. Vorzugsweise sind die Dioden kreisförmig um eine Linse derartig angeordnet, daß sich ihre maximale Beleuchtungsstärke auf das festgelegte Abtastfeld konzentriert. Über eine spezielle Optik wird das reflektierte Licht auf entsprechende Fotosensoren geführt.

Besonders günstig ist es, wenn die Separationskammer im vorgegebenen, von der Lichtquelle beleuchteten Bereich einen transparenten radialen Ausschnitt aufweist. Dieser Ausschnitt ist zweckmäßig in seinem äußeren und inneren Bereich von jeweils einem Referenzstreifen begrenzt, wobei die beiden Referenzstreifen einen konstanten und bekannten Helligkeitswert aufweisen. Auf diese Weise ist es möglich, Einflüsse der Toleranzen und Temperaturdriften von Bauteilen bzw. der Verschmutzung der Optik zu verhindern; sie kann zum Abgleich der elektrischen Schaltung herangezogen werden. Die Referenzstreifen können gleichzeitig der Erfassung des Trennkammerrandes dienen. Zum anderen ermöglicht die Aufbringung der Referenzstreifen die Erfassung mechanischer Verstellungen der Trennkammer in gewissen Grenzen, wobei solche Verstellungen in der elektrischen Schaltung korrigiert werden können. Zusätzlich zu der Erfassung der Phasengrenzen kann auch die Anordnung so getroffen werden, daß die Lichtempfängeranordnung Lichtsignale entsprechend der Absorption in Bestandteilen im Durchlicht zur Bestimmung der Hämolyse empfängt.

Weitere ausgestaltende Merkmale, Vorteile und Anwendungsmöglichkeiten der Erfindung ergeben sich anhand eines in den Zeichnungen dargestellten Ausführungsbeispiels.

Es zeigen:
- Figur 1: Eine Anordnung zum Erfassen und Einstellen der Phasengrenze zwischen den Fraktionen bei einer Blutzentrifuge (Phasendetektor) in schematischer Darstellung
- Figur 2: fünf Diagramme mit der Darstellung der Phasengrenze bei unterschiedlichen Zuständen.
und
- Figur 3: eine Anordnung nach Figur 1 mit zusätzlicher Bestimmung der Hämolyse

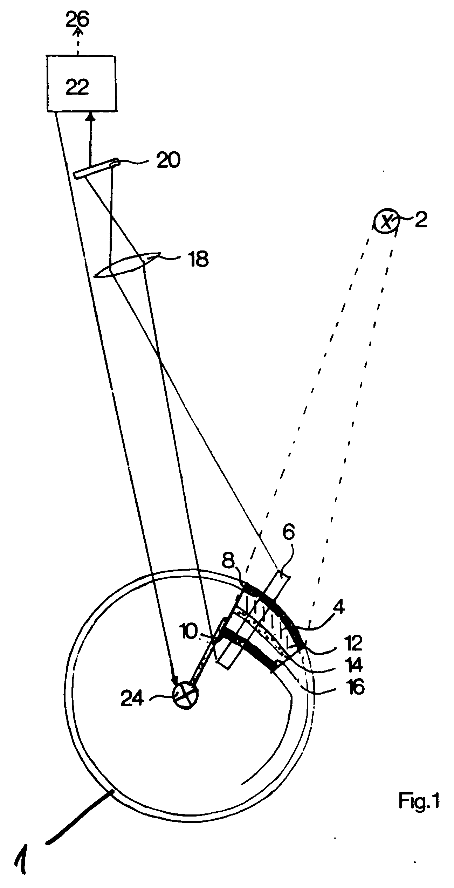

In Figur 1 ist schematisch eine Separationskammer 1 einer Blutzentrifuge dargestellt. Derartige Blutzentrifugen sind in vielfältigen Ausführungsformen bekanntgeworden, zum Beispiel durch die eingangs genannten Patentschriften. Es genügt daher bei der Beschreibung des erfindungsgemäßen Phasendetektors eine schematische Darstellung der Separationskammer dieser Blutzentrifuge. Die Separationskammer 1 weist in einem vorgegebenen, von einer Lichtquelle 2 beleuchteten Bereich einen transparenten radialen Ausschnitt 4 auf. In diesem Bereich, dem Abtastfeld, sind die Phasengrenzen beobachtbar. Das Abtastfeld 4 wird in seinem äußeren bzw. inneren Bereich jeweils von einem Referenzstreifen 8 bzw. 10 begrenzt. Diese beiden Referenzstreifen weisen einen konstanten und bekannten Helligkeitswert auf. Im Abtastfeld 4 sind drei Phasen zu erkennen, nämlich eine äußere Phase 12, die roten Blutkörperchen (Erythrozyten)), eine Mischphase 14 (der sog. buffy coat) und eine innenliegende Plasmaphase 16.

Ein radialer Ausschnitt 6 des Abtastfeldes 4 wird über eine Optik 18 auf eine Lichtempfängeranordnung 20 übertragen, die aus linear angeordneten Photosensoren, einem sog. Zeilensensor, gebildet wird. Die Ausgangssignale dieser Lichtempfängeranordnung, die ein elektrisches Abbild der Helligkeitsunterschiede der einzelnen Fraktionen sind, werden an eine Recheneinheit 22 übertragen, die vorzugsweise ein Mikroprozessor ist. Diese Recheneinheit steuert gemäß einem vorgegebenen Programm nachgeschaltete Stufen an, zum Beispiel ein Stellglied 24 zur Veränderung der Lage der Phasengrenze. Dieses Stellglied wird bei einer Blutzentrifuge vorzugsweise durch eine Plasmapumpe gebildet, die die Plasmafraktion aus der Trennkammer entfernt. Die nachgeschaltete Stufe kann auch beispielsweise zusätzlich ein Display 26 sein, auf dem die Information graphisch dargestellt wird.

Die Lichtquelle 2 bestrahlt intermittierend und synchron zur Drehzahl der Trennkammer das festgelegte Abtastfeld 4. In einer bevorzugten Ausführungsform erfolgt die Beleuchtung durch Leuchtdioden im Infrarotbereich. Die Leuchtdioden erzeugen kurze Lichtblitze, die durch verschiedene Steuersignale ausgelöst werden können. Denkbar ist eine Triggerung durch die Drehzahl oder den Stellungswinkel des Rotors der Trennkammer oder durch eine optische oder magnetische bzw. elektrische Markierung. Durch die Verwendung von Infrarot-Leuchtdioden ist darüber hinaus ein sehr leistungsfähiges Beleuchtungssystem darstellbar. Vorzugsweise sind die Dioden kreisförmig um eine Linse derart angeordnet, daß sich ihre maximale Beleuchtungsstärke auf das festgelegte Abtastfeld 4 konzentriert.

Grundsätzlich ist auch eine Beleuchtung mit Hilfe eines Stroboskops möglich.

Die Referenzstreifen 8 und 10 können aufgrund ihres bekannten und konstanten Helligkeitswertes zum Abgleich der Stufen 22 und 24 herangezogen werden. Somit können Einflüsse der Toleranzen und Temperaturdriften von Bauteilen bzw. der Verschmutzung der Optik verhindert werden. Zum anderen ermöglichen die Referenzstreifen die Erfassung mechanischer Verstellungen der Separationskammer in gewissen Grenzen, wobei solche Verstellungen durch die Stufen 22 bzw. 24 korrigiert werden können.

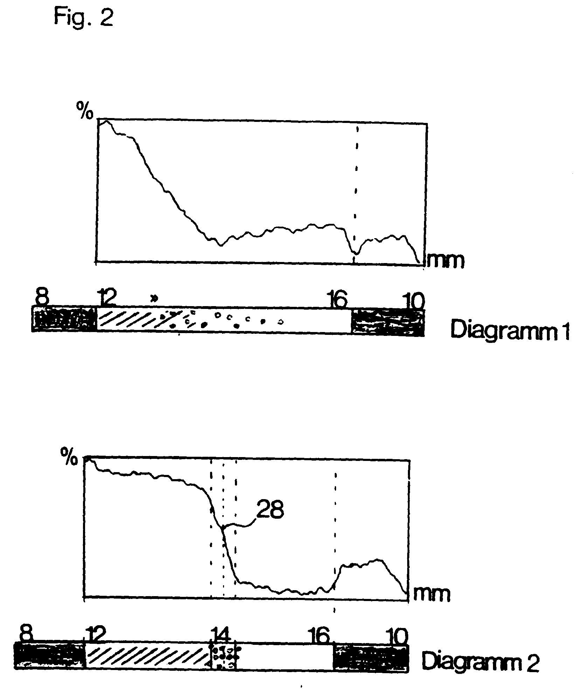

Zur Verdeutlichung der Genauigkeit der von der Lichtempfängeranordnung aufgenommenen und in der Recheneinheit 22 verarbeiteten Signale sind in Figur 2 fünf Diagramme abgebildet, deren Ordinate die Lichtintensität, d.h. die Helligkeit, und deren Abszisse den radialen Ausschnitt 6 im Abtastfeld 4 wiedergibt. Die schematische Darstellung des radialen Ausschnitts ist jeweils unter das zugehörige Diagramm gesetzt. Die Bezifferung der einzelnen Abschnitte des radialen Ausschnittes folgt den Bezugszeichen in Figur 1 im Abtastfeld 4.

Im ersten Diagramm ist das grafische Bild einer sich aufbauenden Trenngrenze gezeigt. Am äußeren Rand erscheinen schon verdichtet rote Blutzellen 12, die ohne definierte Grenze in eine helle Plasmaphase 16 übergehen. Das Diagramm 2 zeigt die grafische Abbildung einer Separation mit stabiler Trenngrenze. Eine dünne Mischphase 14 sedimentiert zwischen den roten Blutzellen 12 und dem Plasma 16. In dieser Fraktion befinden sich im allgemeinen auch Thrombozyten 28, die nur schwer zu detektieren und damit zu gewinnen sind. Die Genauigkeit des erfindungsgemäßen Phasendetektors auf der Basis der Helligkeitsunterschiede der Bestandteile des Blutes zeigt sich hier in der Detektion dieser Zellen, in dem Diagramm als Unebenheit in der sonst gerade verlaufenden Phasengtenzlinie zu sehen.

Durch Bedienung der Regeleinheit 24, in vorliegendem Fallbeispiel eine Plasmapumpe, kann die Phasengrenze verschoben werden. Dies kann manuell erfolgen oder erfindungsgemäß über die Recheneinheit 22 entsprechend einem Programm gesteuert sein.

Zur Gewinnung einiger separierter Blutbestandteile wird die Plasmapumpe solange betätigt, bis keine Phasengrenze mehr zu erkennen ist und sich nur noch rote Blutzellen in der Trennkammer der Blutzentrifuge befinden. Die vom Zeilensensor 20 dabei aufgenommenen Signale sind im Diagramm 3 dargestellt. Über die Recheneinheit 24 werden die Signale verarbeitet und entsprechend die Plasmapumpe gestoppt. Nach neuer Blutzufuhr kann sich nach anfänglichen Verwirbelungen eine neue Trenngrenze aufbauen. Die vom Sensor insoweit empfangenen Signale bei der Verwirbelung sind in Diagramm 4 zu sehen, bei einer sich danach stabilisierenden Trenngrenze im Diagramm 5.

Aus den Diagrammen der Figur 2 wird besonders deutlich, welch differenziertes Erfassungsvermögen dem erfindungsgemäßen Phasendetektor aufgrund der Erfassung der Helligkeitsunterschiede der Bestandteile zukommt und welch differenzierte Steuervorgänge damit auslösbar sind.

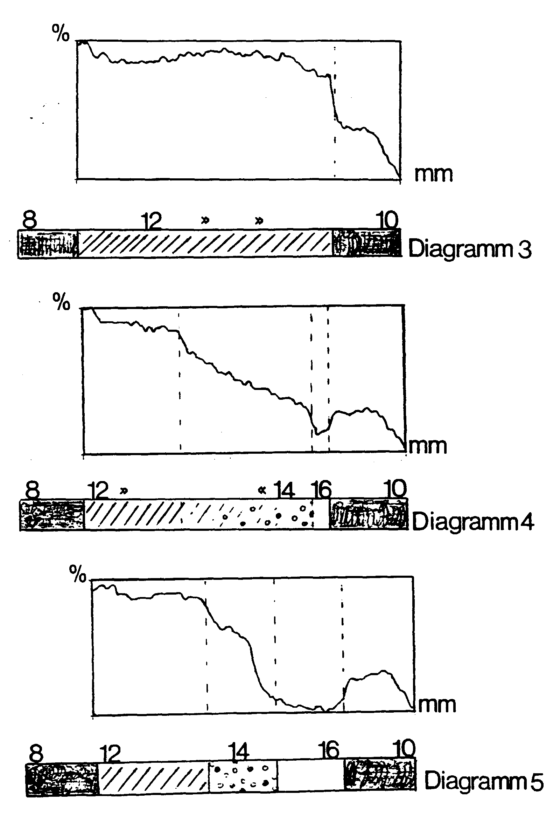

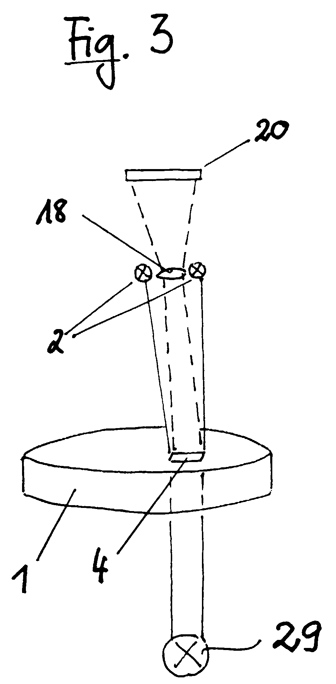

In Figur 3 ist ein weiteres Ausführungsbeispiel der Erfindung dargestellt, bei dem zusätzlich zu der Erfassung der Phasengrenze bei der Bluttrennung über die Helligkeitswerte des zurückgestrahlten Lichtes, wie anhand der Figur 1 und 2 beschrieben, die Hämolyse durch die Absorption von Durchlicht bestimmt wird. Unter dem Grad der Hämolyse versteht man den Absorptionsgrad des Blutplasma.

Die Figur 3 zeigt in schematischer Aufrißdarstellung zunächst die Anordnung nach Figur 1. Mit dieser Anordnung übereinstimmende Elemente sind mit derselben Bezugsziffer versehen. Die kreisförmig angeordneten Lichtquellen 2 beleuchten das Abtastfeld 4 der Trennkammer 1 im Auflicht, wobei der lichtelektrische Empfänger, vorzugsweise der Zeilensensor 20, über die Optik 18 die Helligkeitswerte des zurückgestrahlten Lichtes empfängt.

Zusätzlich ist eine Lichtquelle 29 vorgesehen, die das Abtastfeld 4 in entgegengesetzter Richtung wie die Lichtquellen 2 im Durchlicht beleuchtet. Das durch die fraktionierten Bestandteile hindurchtretende Licht wird von der Optik 18 ebenfalls auf dem Empfänger 20 geleitet. Die Lichtquelle 29 kann in einer ersten Ausführungsform ebenso wie die Lichtquelle 2 alternierend getaktet werden und in einer zweiten Ausführungsform gleichzeitig mit der Lichtquelle 2 das Abtastfeld 4 beleuchten.

Mit Hilfe des von der Lichtquelle 29 erzeugten Durchlichts wird die Auflösung der transparenten Phase, d.h. des Plasmas verbessert. Durch den erhöhten Helligkeitsgrad kann somit ein verbesserter Kontrast gegenüber den dunken Bereichen, beispielsweise den RBC-Bereichen erzeugt werden. Durch die verbesserte Auslösung im hellen Bereich wird zum einen der Übergang von dem dunklen zu dem hellen Bereich verbessert, was zu einer besseren Bestimmung der Fadengrenze zwischen RBC und Plasma führt. Darüber hinaus sind die Abstufungen im hellen Bereich besser erkennbar. So läßt sich der hellste Bereich, der durch unbeeinflußtes Plasma dargestellt wird, besser von etwas trübem Plasma und dieses wiederum von Plasma abgrenzen, das durch Hämolyse rot gefärbt ist. Insgesamt wird also hierdurch die Auflösung verbessert.

Wie bereits vorstehend erwähnt, kann die Lichtquelle 29 gleichzeitig oder aber auch alternierend zu den Lichtquellen 2 getaktet werden. Der Detektor nimmt in beiden Fällen vorteilhafterweise eine Summierung der Signale durch Integralbildung vor und bestimmt somit die einzelnen optische Dichten der Blutfraktionen in Abhängigkeit von der Stellung des Abtastfeldes 4.

## Patentansprüche

1. Vorrichtung zur kontinuierlichen Trennung von Medien in deren Bestandteile durch Dichtezentrifugation in einer Trennkammer (1), insbesondere Blutzentrifuge, mit einer Anordnung zum fortlaufenden Erfassen und Einstellen der Phasengrenze zwischen mindestens zwei optisch unterscheidbaren Fraktionen (12, 14, 16) des Mediums, d.h. mit einem Phasendetektor, bestehend aus einer Lichtquelle (2), die die Trennkammer im Bereich (4) der sich einstellenden Phasengrenzen beleuchtet, aus einer Lichtempfängeranordnung (20) und einer Optik (18), die einen bestimmten Abschnitt (6) des Bereiches auf die Lichtempfängeranordnung abbildet, die auf unterschiedliche Lichtsignale entsprechend optischen Unterschieden der Fraktionen anspricht, und aus einer der Lichtempfängeranordnung nachgeschalteten elektrischen Steuerschaltung (22) zum Auslösen von Steuersignalen, dadurch gekennzeichnet, daß Lichtquelle (2) und Lichtempfängeranordnung (20) mit der Optik (18) derart angeordnet sind, daß die Lichtempfängeranordnung unterschiedliche Lichtsignale entsprechend den Helligkeitsstufen der zu trennenden Fraktionen empfängt und die Steuerschaltung (22) so ausgebildet ist, daß differenziert Steuersignale abhängig von den einzelnen Helligkeitsstufen der abgetrennten Fraktionen auslösbar sind.

2. Vorrichtung nach Anspruch 1, dadurch gekennzeichnet, daß die Lichtempfängeranordnung (20) aus einer Anordnung von mindestens zwei voneinander getrennten Photosensoren besteht, die selektiv und proportional der Helligkeit der zu trennenden Bestandteile Ausgangssignale liefern, denen als Steuerschaltung eine Recheneinheit (22) nachgeschaltet ist, wobei die Recheneinheit, vorzugsweise ein Mikroprozessor, die Ausgangssignale verarbeitet und gemäß einem vorgebbaren Programm mindestens eine nachgeschaltete Stufe ( 24, 26) ansteuert.

3. Vorrichtung nach Anspruch 2, dadurch gekennzeichnet, daß die Photosensoren linear angeordnet sind.

4. Vorrichtung nach Anspruch 3, dadurch gekennzeichnet, daß die Photosensoren einen CCD-Zeilensensor bilden.

5. Vorrichtung nach Anspruch 2, 3 oder 4, dadurch gekennzeichnet, daß die nachgeschaltete Stufe ein Stellglied, Regeleinheit 24, für die Ansteuerung der Phasengrenze ist, vorzugsweise eine Plasmapumpe bei der Blutseparation.

6. Vorrichtung nach einem der Ansprüche 2 bis 5, dadurch gekennzeichnet, daß die nachgeschaltete Stufe ein Drucker oder ein Plotter ist.

7. Vorrichtung nach einem der Ansprüche 2 bis 6, dadurch gekennzeichnet, daß die nachgeschaltete Stufe ein Display (26) ist.

8. Vorrichtung nach einem der Ansprüche 1 bis 7, dadurch gekennzeichnet, daß die Lichtquelle (2) so angeordnet ist, daß sie den vorgegebenen Bereich (4) der Trennkammer (1) im Auflicht beleuchtet und die Lichtempfängeranordnung (20) mit der Optik (18) so angeordnet ist, daß das reflektierte Licht auf die Lichtempfängeranordnung abbildbar ist.

9. Vorrichtung nach Anspruch 8, dadurch gekennzeichnet, daß die Lichtquelle (2) intermittierend anschaltbar ist, vorzugsweise synchron mit der Drehung der Trennkammer (1).

10. Vorrichtung nach Anspruch 9, dadurch gekennzeichnet, daß als Lichtquelle (2) mindestens eine Infrarot-Leuchtdiode vorgesehen ist.

11. Vorrichtung nach einem der Ansprüche 1 bis 10, dadurch gekennzeichnet, daß die Separationskammer (1) im vorgegebenen, von der Lichtquelle beleuchteten Bereich einen transparenten radialen Ausschnitt (4) aufweist.

12. Vorrichtung nach Anspruch 11, dadurch gekennzeichnet, daß der transparente radiale Ausschnitt (4) in seinem äußeren und inneren Bereich von jeweils einem Referenzstreifen (8, 10) begrenzt ist und daß die beiden Referenzstreifen einen konstanten und bekannten Helligkeitswert aufweisen.

13. Vorrichtung nach einem der Ansprüche 1-12, dadurch gekennzeichnet, daß zusätzlich optische Mittel (29) vorgesehen und derart angeordnet sind, daß die Trennkammer (1) im Bereich (4) der sich einstellenden Phasengrenzen entgegen der Beleuchtungsrichtung der Lichtquelle (2) durchstrahlt ist und die Lichtempfängeranordnung (20) zusätzlich Lichtsignale entsprechend der Absorption in Bestandteilen im Durchlicht empfängt.

## Claims

1. A device for the continuous separation of media into their components by means of density centrifugation in a separation chamber (1), and blood centrifuges in particular, with an arrangement for the continuous detection and adjustment of the phase boundaries between at least two differentiatable fractions (12, 14, 16) of the medium, i.e. a phase detector, consisting of a light source (2), which illuminates the separation chamber in the area (4) ofthe phase boundaries which are to be set, a light receiving arrangement (20), and an optics element (18), which reproduces a specific section (6) of the area onto the light receiving arrangement, which responds to different light signals according to optical differences ofthe fractions, and an electrical control circuit (22), connected downstream of the light receiving arrangement, for triggering control signals, characterised in that the light source (2) and the light receiving arrangement (20) with the optics (18) are arranged in such a way that the light receiving arrangement receives light signals which can be differentiated according to the degrees of brightness of the fractions which are to be separated, and the control circuit (22) is designed in such a way that differentiated control signals can be triggered, depending on the individual brightness stages ofthe separated fractions.

2. A device according to Claim 1, characterised in that the light receiving arrangement (20) consists ofan arrangement ofat least two photosensors separated from one another, which deliver the output signals selectively and proportionally to the brightness of the components which are to be separated, and downstream of which a computing unit (22) is connected as the control circuit, in which situation the computing unit, for preference a microprocessor, processes the output signals, and actuates at least one downstream stage (24, 26) in accordance with a predeterminable program.

3. A device according to Claim 2, characterised in that the photosensors are arranged in linear fashion.

4. A device according to Claim 3, characterised in that the photosensors form a CCD line sensor.

5. A device according to Claims 2, 3 or 4, characterised in that the downstream stage is an actuating element, a control element 24, for the actuation of the phase boundary, for preference a plasma pump in the case ofblood separation.

6. A device according to one of Claims 2 to 5, characterised in that the downstream stage is a printer or a plotter.

7. A device according to one of Claims 2 to 6, characterised in that the downstream stage is a display (26).

8. A device according to one of Claims 1 to 7, characterised in that the light source (2) is arranged in such a way that it illuminates the specified area (4) of the separation chamber (10 in a vertical light, and the light receiving arrangement (20) with the optics (18) is arranged in such a way that the reflected light can be reproduced onto the light receiving arrangement.

9. A device according to Claim 8, characterised in that the light source (2) can be switched on intermittently, for preference in synchrony with the rotation of the separation chamber (1).

10. A device according to Claim 9, characterised in that at least one infrared light diode is provided as the light source (2).

11. A device according to one of Claims 1 to 10, characterised in that the separation chamber (1) features a transparent radial window (4) in the specified area illuminated by the light source.

12. A device according to Claim 11, characterised in that the transparent radial window (4) is delimited in its outer and inner areas by a reference stripe (8, 10) in each case, and that the two reference stripes feature a constant and known brightness value.

13. A device according to one of Claims 1-12, characterised in that additional optical means (29) are provided, and arranged in such a way that the separation chamber (1) is permeated by light in the area (4) of the phase boundaries which are to be set, against the direction of illumination of the light source (2), and the light receiving arrangement (20) additionally receives light signals in correspondence with the absorption in the components in the transillumination.

## Revendications

1. Dispositif pour la séparation continue de milieux dans leurs composants, grâce à une centrifugation de densité dans une chambre de séparation (1), en particulier une centrifugeuse de sang, ayant un agencement permettant de détecter et de régler de manière continue la limite de phase entre au moins deux fractions (12, 14, 16), pouvant être optiquement différenciées, du milieu, c'est-à-dire avec un détecteur de phase, comprenant une source lumineuse (2) qui éclaire la chambre de séparation dans la zone (4) des limites de phase qui se règlent, une unité de réception de lumière (20) et un objectif (18) qui reproduit sur l'unité de réception de lumière une partie (6) déterminée de la zone, laquelle réagit à des signaux lumineux différents correspondant à des différences optiques des fractions, et un circuit de commande (22) électrique, placé en aval de l'unité de réception de lumière, destiné à déclencher des signaux de commande, caractérisé en ce que la source lumineuse (2) et l'unité de réception de lumière (20) sont agencés avec l'objectif (18) de sorte que l'unité de réception de lumière reçoive des signaux lumineux différents correspondant aux niveaux de luminosité des fractions à séparer, et en ce que le circuit de commande (22) est réalisé de sorte que, de manière différenciée, des signaux de commande peuvent être déclenchés indépendamment des niveaux de luminosité isolés des fractions séparées.

2. Dispositif selon la revendication 1, caractérisé en ce que l'unité de réception de lumière (20) comprend un agencement d'au moins deux photocapteurs séparés l'un de l'autre, qui délivrent des signaux de sortie de manière sélective et proportionnelle à la luminosité des composants à séparer, auxquels une unité de calcul (22), en tant que circuit de commande, est raccordée en aval, l'unité de calcul, de préférence un microprocesseur, traitant les signaux de sortie et, selon un programme pouvant être déterminé, commandant au moins un étage (24, 26) placé en aval.

3. Dispositif selon la revendication 2, caractérisé en ce que les photocapteurs sont disposés de manière linéaire.

4. Dispositif selon la revendication 3, caractérisé en ce que les photocapteurs forment un capteur linéaire à couplage de charges.

5. Dispositif selon la revendication 2, 3 ou 4, caractérisé en ce que l'étage placé en aval est un élément de réglage, une unité de régulation (24) pour la commande de la limite de phase, de préférence une pompe à plasma dans le cas de la séparation de sang.

6. Dispositif selon l'une des revendications 2 à 5, caractérisé en ce que l'étage placé en aval est une imprimante ou un traceur de courbes.

7. Dispositif selon l'une des revendications 2 à 6, caractérisé en ce que l'étage placé en aval est une unité d'affichage (26).

8. Dispositif selon l'une des revendications 1 à 7, caractérisé en ce que la source lumineuse (2) est disposée de sorte qu'elle éclaire en lumière incidente la zone (4) déterminée de la chambre de séparation (1), et en ce que l'unité de réception de lumière (20) est agencée avec l'objectif (18) de sorte que la lumière réfléchie peut être reproduite sur l'unité de réception de lumière.

9. Dispositif selon la revendication 8, caractérisé en ce que la source lumineuse (2) peut être mise en circuit par intermittence, de préférence de manière synchrone avec la rotation de la chambre de séparation (1).

10. Dispositif selon la revendication 9, caractérisé en ce qu'au moins une diode électroluminescente à infrarouge est prévue en tant que source lumineuse (2).

11. Dispositif selon l'une des revendications 1 à 10, caractérisé en ce que la chambre de séparation (1) présente dans la zone déterminée, éclairée par la source lumineuse, une découpure (4) transparente radiale.

12. Dispositif selon la revendication 11, caractérisé en ce que la découpure (4) transparente, radiale, est limitée dans sa zone extérieure et intérieure par respectivement une bande de référence (8, 10) et en ce que les deux bandes de référence présentent une valeur de luminosité constante et connue.

13. Dispositif selon l'une des revendications 1 à 12, caractérisé en ce que, en outre, des moyens optiques (29) sont prévus et sont agencés de sorte que la chambre de séparation (1) est traversée par un rayonnement opposé à la direction d'éclairage de la source lumineuse (2), dans la zone (4) des limites de phase qui se règlent, et en ce que l'unité de réception de lumière (20), en outre, reçoit en lumière transmise des signaux lumineux correspondant à l'absorption dans les composants.
